# EUROPEAN PATENT SPECIFICATION

(11) **EP 2 420 767 B1**
(45) Date of publication and mention of the grant of the patent: **11.04.2018**
(21) Application number: 11170783.2
(22) Date of filing: 21.06.2011
(51) Int. Cl.: F25B 47/02

(54) **Heat-pump hot water supply and air conditioning apparatus**
Wärmepumpenwasserversorgungs- und Klimaanlagevorrichtung
Alimentation en eau par pompe à chaleur et appareil de climatisation

(30) Priority: 24.06.2010 JP 2010143617
(43) Date of publication of application: 22.02.2012
(73) Proprietor: MITSUBISHI HEAVY INDUSTRIES THERMAL SYSTEMS, LTD., Tokyo 108-8215 (JP)
(72) Inventor: Ishizuka, Hirofumi, Tokyo, 108-8215 (JP); Kobayashi, Takayuki, Tokyo, 108-8215 (JP)
(74) Representative: Intès, Didier Gérard André

(56) References cited:
- CN-Y- 2 935 006
- JP-A- H06 272 964
- US-A- 4 592 206
- US-A- 4 688 396
- US-A- 5 138 843
- US-A1- 2004 003 601
- US-A1- 2008 168 781

## Description

### {Technical Field}

The present invention relates to an air-heat-source heat-pump hot water supply and air-conditioning apparatus that produces hot water by heating water with a refrigerant/water heat exchanger using refrigerant.

### {Background Art}

In an air-heat-source heat-pump hot water supply and air-conditioning apparatus that has a refrigerant circuit including a compressor, a heat-source-side air heat exchanger, a throttle mechanism, and a refrigerant/water heat exchanger and that produces hot water by heating water with the refrigerant/water heat exchanger using refrigerant, frost is known to occur at the heat-source-side air heat exchanger functioning as an evaporator when producing hot water in an environment with a low outdoor air temperature. This frost suppresses heat exchange between the outdoor air and the refrigerant at the heat-source-side air heat exchanger, diminishing the hot-water producing ability. Therefore, when frosting at the air heat exchanger is detected, a defrosting operation is performed, in which the air heat exchanger having frost thereon is caused to function as a condenser so that the refrigerant dissipates heat, causing the frost to melt.

Various technologies for defrosting have been proposed. In technology disclosed in Patent Literature 1, the air heat exchanger is provided with means for detecting a temperature distribution, and a suitable defrosting method is selected from multiple defrosting methods based on the temperature distribution; specifically, either reverse cycle defrosting, in which the refrigerant circuit is switched from a heating cycle to a cooling cycle by using a switching valve to cause melting of the frost at the air heat exchanger, or hot-gas bypass defrosting, in which high-temperature, high-pressure hot gas discharged from the compressor is introduced into the air heat exchanger directly through a bypass circuit to cause melting of the frost, can be selected to perform defrosting efficiently.

Furthermore, in technology disclosed in Patent Literature 2, during reverse cycle defrosting in a heat-pump hot water supply apparatus, when the temperature at the water intake port or the water exit port of the refrigerant/water heat exchanger or the temperature of the refrigerant/water heat exchanger remains less than or equal to a predetermined temperature for a certain period, a portion of or all the refrigerant circulating through the refrigerant/water heat exchanger is distributed to a bypass circuit, thereby preventing freezing of water at the refrigerant/water heat exchanger.
Patent Literature 3 discloses a compressor, a radiator, an expander and an evaporator connected in series to define a refrigerating cycle, and a bypass circuit to bypass the expander which comprises an on-off valve provided with a controller for controlling the on-off valve during a defrosting operation.

### {Citation List}

### {Patent Literature}

{PTL 1}
   Japanese Unexamined Patent Application, Publication No. Hei 8-226715
{PTL 2}
   Japanese Unexamined Patent Application, Publication No. 2009-41860
{PTL 3}
   United States Patent Application, Publication No. 2008/0168781 A1

### {Summary of Invention}

### {Technical Problem}

However, with the technology of Patent Literature 1, in which the temperature distribution of the air heat exchanger is detected and a suitable defrosting method is selected from multiple defrosting methods based on the temperature distribution, although it is possible to perform defrosting efficiently, since multiple defrosting methods are required, the configuration becomes complex, raising costs. Furthermore, even if such a configuration is adopted for a heat-pump hot water supply apparatus, there is no assurance that freezing of water at the refrigerant/water heat exchanger can be prevented during defrosting. Thus, the technology fails to overcome the problem specific to heat-pump hot water supply apparatuses.

In the case of the technology disclosed in Patent Literature 2, during defrosting in a heat-pump hot water supply apparatus that employs reverse cycle defrosting, heat is absorbed from water circulating through the refrigerant/water heat exchanger, causing efficient melting of frost at the air heat exchanger, and freezing of water at the refrigerant/water heat exchanger can be prevented. However, when refrigerant is circulated through the bypass circuit in order to prevent freezing of water at the refrigerant/water heat exchanger, it is not possible to absorb heat from the water circulating through the refrigerant/water heat exchanger. Therefore, the defrosting ability is diminished, so that a longer defrosting operation time is required.

That is, with the above heat-pump hot water supply apparatus, during defrosting, heat is absorbed from water in a hot water supply circuit. Thus, if the water is cooled excessively, there is a risk of water freezing at the refrigerant/water heat exchanger and damaging the heat exchanger. Thus, during defrosting, it is necessary to prevent an excessive drop in the refrigerant evaporation temperature with the temperature of water circulating through the refrigerant/water heat exchanger. However, immediately after the start of defrosting, the air heat exchanger is at low temperature, so that the refrigerant tends to accumulate and does not flow sufficiently to the refrigerant/water heat exchanger, resulting in a drop in the evaporation temperature in some cases. The technology of Patent Literature 2 does not overcome this problem, so that a longer time is required for the defrosting operation as a result of the refrigerant bypassing the refrigerant/water heat exchanger.

The present invention has been made in view of the situation described above, and an object thereof is to provide a heat-pump hot water supply and air-conditioning apparatus with which freezing of and damage to a refrigerant/water heat exchanger resulting from a reduction of the evaporation pressure can be prevented during defrosting, and the defrosting operation time can be reduced.

### {Solution to Problem}

In order to overcome the problems described above, a heat-pump hot water supply and air-conditioning apparatus according to the present invention employ the following solutions.

A heat-pump hot water supply and air-conditioning apparatus according to an aspect of the present invention has a refrigerant circuit including a compressor, a four-way switching valve, a heat-source-side air heat exchanger, one or two electronic expansion valves, and a refrigerant/water heat exchanger, in which water is heated using refrigerant at the refrigerant/water heat exchanger to produce hot water, and when frosting occurs at the heat-source-side air heat exchanger, the refrigerant circuit is switched to a cooling cycle by using the four-way switching valve, whereby a defrosting operation is performed, and a bypass circuit having an electromagnetic valve that is controlled to open or close during the defrosting operation is connected in parallel to at least one of the electronic expansion valves.

According to this aspect of the present invention, in the heat-pump hot water supply and air-conditioning apparatus, in which the refrigerant circuit is switched to the cooling cycle (defrosting cycle) by using the four-way switching valve and to perform a defrosting operation, the bypass circuit having the electromagnetic valve that is controlled to open or close during the defrosting operation is connected in parallel to the one or two electronic expansion valves of the refrigerant circuit. Thus, from immediately after the start of the defrosting operation, the refrigerant having dissipated heat and condensed at the heat-source-side air heat exchanger is supplied to the refrigerant/water heat exchanger through the bypass circuit, so that a sufficient amount of refrigerant can be supplied to the refrigerant/water heat exchanger. This serves to prevent freezing of and damage to the refrigerant/water heat exchanger, caused by a drop in the evaporation temperature resulting in decreased water temperature immediately after the start of the defrosting operation, when refrigerant does not readily flow to the refrigerant/water heat exchanger due to a pressure loss attributable to the one or two electronic expansion valves, etc. Furthermore, since it is possible to absorb as much heat as possible from water at the refrigerant/water heat exchanger and to use the heat for defrosting, the time required for defrosting can be reduced.

Furthermore, in a heat-pump hot water supply and air-conditioning apparatus according to another aspect of the present invention, in the above-described heat-pump hot water supply and air-conditioning apparatus, the bypass circuit is connected in parallel to both an electronic expansion valve for cooling and an electronic expansion valve for heating, which are connected in series with each other.

According to this aspect of the present invention, since the bypass circuit is connected in parallel to both the electronic expansion valve for cooling and the electronic expansion valve for heating, which are connected in series with each other, the pressure loss in the circuit between the heat-source-side air heat exchanger and the refrigerant/water heat exchanger can be considerably reduced during defrosting, so that a sufficient amount of refrigerant condensed by the heat-source-side air heat exchanger can be supplied to the refrigerant/water heat exchanger through the bypass circuit. This serves to suppress an excessive drop in the evaporation temperature immediately after the start of a defrosting operation. Accordingly, freezing of water at the refrigerant/water heat exchanger can be prevented reliably.

Furthermore, in a heat-pump hot water supply and air-conditioning apparatus according to another aspect of the present invention, in the above-described heat-pump hot water supply and air-conditioning apparatus, of an electronic expansion valve for cooling and an electronic expansion valve for heating, which are connected in series with each other, the bypass circuit is connected in parallel only to the electronic expansion valve for heating.

According to this aspect of the present invention, since the bypass circuit is connected in parallel only to the electronic expansion valve for heating of the electronic expansion valve for cooling and the electronic expansion valve for heating, which are connected in series with each other, in a system where two expansion valves, namely, an electronic expansion valve for cooling and an electronic expansion valve for heating, are provided, even when the bypass circuit is connected in parallel only to the electronic expansion valve for heating, the pressure loss in the circuit between the heat-source-side air heat exchanger and the refrigerant/water heat exchanger can be reduced, so that a sufficient amount of refrigerant condensed by the heat-source-side air heat exchanger can be supplied to the refrigerant/water heat exchanger. This also serves to suppress an excessive drop in the evaporation temperature at the refrigerant/water heat exchanger, which serves to prevent freezing of water at the refrigerant/water heat exchanger.

Furthermore, in a heat-pump hot water supply and air-conditioning apparatus according to another aspect of the present invention, in any one of the above-described heat-pump hot water supply and air-conditioning apparatuses, the bypass circuit has a check valve for prohibiting a flow of refrigerant in a heating cycle.

According to this aspect of the present invention, since the bypass circuit has the check valve for prohibiting the flow of refrigerant in the heating cycle, there is no risk of the refrigerant flowing to the bypass circuit during the heating cycle, in which hot water is produced. Therefore, when defrosting operation conditions are satisfied, the electromagnetic valve of the bypass circuit may be opened before switching of the refrigerant circuit to the cooling cycle (defrosting cycle) with the four-way switching valve. Accordingly, when a defrosting operation is started, it is possible to immediately circulate refrigerant through the bypass circuit and smoothly supply the refrigerant to the refrigerant/water heat exchanger, thereby suppressing a drop in the evaporation temperature.

In a heat-pump hot water supply and air-conditioning apparatus according to the present invention, in any one of the above-described heat-pump hot water supply and air-conditioning apparatuses, the electromagnetic valve in the bypass circuit is opened when defrosting operation conditions are satisfied and is closed when an operating frequency of the compressor becomes greater than or equal to a preset frequency and a low pressure becomes greater than or equal to a preset pressure or an intake degree of superheating becomes less than or equal to a preset value during the defrosting operation. Thus, in a situation immediately after the start of a defrosting operation, where refrigerant does not readily flow to the refrigerant/water heat exchanger and thus the evaporation temperature tends to drop, refrigerant is supplied reliably through the bypass circuit, suppressing a drop in the evaporation temperature. On the other hand, in a situation where the operating frequency of the compressor is greater than or equal to the preset frequency and the low pressure is greater than or equal to the preset pressure or the intake degree of superheating is less than or equal to the preset value, so that there is no risk of freezing at the refrigerant/water heat exchanger, refrigerant is supplied through the normal refrigerant circuit, where the one or two electronic expansion valves are provided. Thus, it is possible to absorb a sufficient amount of heat from water at the refrigerant/water heat exchanger to vaporize the refrigerant and to use the heat for defrosting. Accordingly, freezing of and damage to the refrigerant/water heat exchanger resulting from a drop in the evaporation temperature can be prevented, and the time required for defrosting can be reduced by absorbing as much heat as possible from water and performing defrosting with the heat. Furthermore, a reverse flow of liquid to the compressor during defrosting operations can be prevented.

Furthermore, in a heat-pump hot water supply and air-conditioning apparatus according to another aspect of the present invention, in any one of the above-described heat-pump hot water supply and air-conditioning apparatuses, when the defrosting operation is started upon satisfying defrosting operation conditions by opening the electromagnetic valve and switching the refrigerant circuit to the cooling cycle by using the four-way switching valve, an operating frequency of the compressor is initially decreased to a minimum preset frequency.

According to this aspect of the present invention, when the defrosting operation is started upon satisfying the defrosting operation conditions by opening the electromagnetic valve and switching the refrigerant circuit to the cooling cycle by using the four-way switching valve, the operating frequency of the compressor is initially decreased to the minimum preset frequency. Thus, immediately after the start of the defrosting operation, it is possible to supply a sufficient amount of refrigerant to the refrigerant/water heat exchanger through the bypass circuit, and also to suppress an excessive drop in the evaporation temperature by decreasing the operating frequency of the compressor to the minimum preset frequency to lower the performance of the compressor. Accordingly, freezing of and damage to the refrigerant/water heat exchanger resulting from a drop in the evaporation temperature can be prevented more reliably.

Furthermore, in a heat-pump hot water supply and air-conditioning apparatus according to another aspect of the present invention, in the above-described heat-pump hot water supply and air-conditioning apparatus, after the defrosting operation is started, the operating frequency of the compressor is maintained at the minimum preset frequency, and when a low pressure becomes greater than or equal to a preset pressure, the operating frequency of the compressor is gradually increased from the minimum preset frequency.

According to this aspect of the present invention, after the defrosting operation is started, the operating frequency of the compressor is maintained at the minimum preset frequency, and when the low pressure becomes greater than or equal to the preset pressure, the operating frequency of the compressor is gradually increased from the minimum preset frequency. Thus, after the start of the defrosting operation, while the low pressure, i.e., the evaporation pressure, is lower than the preset pressure, so that the evaporation temperature is relatively low, the operating frequency of the compressor is maintained at the minimum preset frequency, suppressing a further drop in the low pressure. When the low pressure becomes greater than or equal to the preset pressure, so that there is no risk of freezing caused by a drop in the evaporation temperature, the performance of the compressor can be raised by increasing the operating frequency of the compressor. Thus, it is possible to enhance the defrosting ability while preventing freezing of and damage to the refrigerant/water heat exchanger resulting from an excessive drop in the evaporation temperature, so that the time required for defrosting can be reduced.

Furthermore, in a heat-pump hot water supply and air-conditioning apparatus according to another aspect of the present invention, in any one of the above-described heat-pump hot water supply and air-conditioning apparatuses, afteran operating frequency of the compressor becomes greater than or equal to a preset frequency and the low pressure becomes greater than or equal to a preset pressure or the intake degree of superheating becomes less than or equal to a preset value during the defrosting operation, so that the electromagnetic valve is closed, the operating frequency of the compressor is maintained at that frequency, and when the low pressure becomes greater than or equal to another preset pressure, the operating frequency of the compressor is increased, and the defrosting operation is terminated when defrosting operation termination conditions are satisfied.

According to this aspect of the present invention, after the operating frequency of the compressor becomes greater than or equal to a preset frequency and the low pressure becomes greater than or equal to a preset pressure or the intake degree of superheating becomes less than or equal to a preset value during the defrosting operation, so that the electromagnetic valve is closed, the operating frequency of the compressor is maintained at that frequency, and when the low pressure becomes greater than or equal to another preset pressure, the operating frequency of the compressor is increased, and the defrosting operation is terminated when defrosting operation termination conditions are satisfied. Thus, even when the electromagnetic valve in the bypass circuit is closed to disable bypass supply of refrigerant to the refrigerant/water heat exchanger, while the low pressure is greater than or equal to the preset pressure, it is possible to enhance the defrosting ability by further increasing the operating frequency of the compressor until the defrosting operation termination conditions are satisfied. Accordingly, the time required for defrosting can be reduced even further.

### {Advantageous Effects of Invention}

According to the present invention, from immediately after the start of a defrosting operation, refrigerant having dissipated heat and condensed at the heat-source-side air heat exchanger is supplied to the refrigerant/water heat exchanger through the bypass circuit, so that a sufficient amount of refrigerant can be supplied to the refrigerant/water heat exchanger. This serves to prevent freezing of and damage to the refrigerant/water heat exchanger, caused by a drop in the evaporation temperature resulting in the decreased water temperature immediately after the start of the defrosting operation, when refrigerant does not readily flow to the refrigerant/water heat exchanger due to a pressure loss attributable to the one or two electronic expansion valves, etc. Furthermore, since it is possible to absorb as much heat as possible from water at the refrigerant/water heat exchanger and to use the heat for defrosting, the time required for defrosting can be reduced.

### {Brief Description of Drawings}

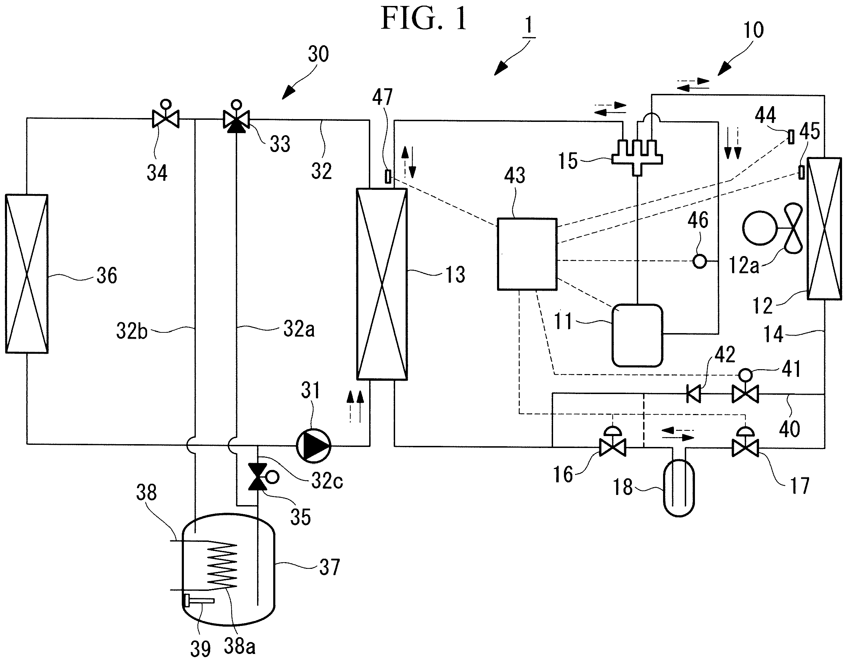

{Fig. 1}
   Fig. 1 is a refrigerant circuit diagram of a heat-pump hot water supply and air-conditioning apparatus according to a first embodiment of the present invention.
{Fig. 2}
   Fig. 2 is a flow chart of control of a defrosting operation of the heat-pump hot water supply and air-conditioning apparatus shown in Fig. 1.
{Fig. 3}
   Fig. 3 is a timing chart of the defrosting operation of the heat-pump hot water supply and air-conditioning apparatus shown in Fig. 1.

### {Description of Embodiments}

Embodiments of the present invention will be described below with reference to the drawings.

### [First Embodiment]

Now, a first embodiment of the present invention will be described with reference to Figs. 1 to 3.

Fig. 1 shows a refrigerant circuit diagram of a heat-pump hot water supply and air-conditioning apparatus according to the first embodiment of the present invention. A heat-pump hot water supply and air-conditioning apparatus 1 includes an air-heat-source heat pump 10 for which it is possible to select either a cooling cycle or a heating cycle by switching the refrigerant circulating direction and a water circuit 30 for using hot water, obtained by heating water with the air-heat-source heat pump 10, for hot water supply or heating.

With the air-heat-source heat pump 10, refrigerant discharged from a compressor 11 undergoes repeated state changes between gas and liquid while circulating through a closed-cycle refrigerant circuit 14 including a heat-source-side air heat exchanger 12 and a refrigerant/water heat exchanger 13. The refrigerant circuit 14 shown has a four-way switching valve 15 on the discharging side of the compressor 11. The four-way switching valve 15 allows reversing the refrigerant circulating direction. That is, it is possible to select either a cooling cycle (defrosting cycle), in which the refrigerant is circulated clockwise through the heat-source-side air heat exchanger 12 to the refrigerant/water heat exchanger 13, or a heating cycle, in which the refrigerant is circulated counterclockwise through the refrigerant/water heat exchanger 13 to the heat-source-side air heat exchanger 12.

In addition to the heat-source-side air heat exchanger 12, the refrigerant/water heat exchanger 13, and the four-way switching valve 15, the refrigerant circuit 14 includes an electronic expansion valve 16 for cooling and an electronic expansion valve 17 for heating, as well as a receiver 18, as is known. The electronic expansion valve 16 for cooling and the electronic expansion valve 17 for heating are disposed in series with the receiver 18 in between. Furthermore, an outdoor-air fan 12a for circulating outdoor air is attached to the heat-source-side air heat exchanger 12. The outdoor-air fan 12a is configured so that it is possible to adjust the amount of outdoor air circulated to the heat-source-side air heat exchanger 12 (the amount of air feeding) as appropriate.

The water circuit 30 includes a hot-water circulation path 32, in which water circulated via a pump 31 absorbs heat from the refrigerant in the refrigerant/water heat exchanger 13 provided in the refrigerant circuit 14 to become hot water, and the hot water is circulated between the refrigerant/water heat exchanger 13 and a load-side radiator (usage-side heat exchanger) 36 to use the hot water as a heat source for heating, etc. The hot-water circulation path 32 is connected to a heat storage tank 37 in which hot water can be introduced from the hot-water circulation path 32 and stored as heat-storing hot water via a three-way switching valve (control valve) 33 with which it is possible to adjust the flow ratio, a first electromagnetic valve 34, and a second electromagnetic valve 35.

The heat storage tank 37 is connected to the hot-water circulation path 32 via a first feedback path (water circuit) 32a through which hot water heated by the refrigerant/water heat exchanger 13 can be fed back to the vicinity of the bottom of the heat storage tank 37 via the three-way switching valve 33 provided in the hot-water circulation path 32 for circulation of the hot water through the radiator 36, a second feedback path (water circuit) 32b through which heat-storing hot water obtained from an upper part of the heat storage tank 37 can be fed back to the side of the hot-water circulation path 32 from between the three-way switching valve 33 and the first electromagnetic valve 34, and a suction path (water circuit) 32c through which hot water is sucked up from the vicinity of the bottom of the heat storage tank 37 via the second electromagnetic valve 35 to the side of the hot-water circulation path 32 on the upstream side of the pump 31.

Furthermore, the heat storage tank 37 is provided with a sanitary-water supplying circuit 38 for supplying hot water for hot water supply, heated by using heat of the heat-storing hot water stored in the heat storage tank 37, and an electric heater (heating means) 39, which is turned on as needed. The sanitary-water supplying circuit 38 is a hot-water supplying circuit through which water supplied by a hot water supply pump (not shown) is heated while flowing through a heat exchanger 38a provided in the heat storage tank 37 to become hot water, which is then used for hot water supply, etc. The electric heater 39 is auxiliary heating means that is used when the amount of heat in the heat-storing hot water stored in the heat storage tank 37 is lower than or equal to a predetermined value. That is, the electric heater 39 is turned on when the temperature of the heat-storing hot water in the heat storage tank 37 is lower than or equal to a predetermined temperature, heating the heat-storing hot water to a desired temperature.

With the thus-configured water circuit 30, by suitably controlling the degree of opening or the opening/closing of the three-way switching valve 33, the first electromagnetic valve 34, and the second electromagnetic valve 35 described above, it is possible to selectively perform either a heating operation of supplying hot water to the radiator 36 or a heat storing operation of supplying hot water to the heat storage tank 37, or to perform a heating operation and a heat storing operation simultaneously by distributing and supplying hot water both to the radiator 36 and the heat storage tank 37.

When the heating cycle is selected for the refrigerant circuit 14, low-temperature, low-pressure gas refrigerant is compressed by the compressor 11 to become high-temperature, high-pressure gas refrigerant, which is discharged to the refrigerant circuit 14. As indicated by solid arrows in the figure, the gas refrigerant is introduced into the refrigerant/water heat exchanger 13 via the four-way switching valve 15 and is circulated counterclockwise. In this case, the refrigerant/water heat exchanger 13 exchanges heat between the water in the water circuit 30 circulated by the pump 31 and the high-temperature, high-pressure gas refrigerant, functioning as a condenser that heats the water with the heat of condensation given off by condensation of the refrigerant. As a result, the high-temperature, high-pressure gas refrigerant circulating through the refrigerant circuit 14 condenses to become high-temperature, high-pressure liquid refrigerant, and the water circulating through the water circuit 30 absorbs heat from the refrigerant to become hot water.

The refrigerant condensed by the refrigerant/water heat exchanger 13 flows into the receiver 18 through the fully opened electronic expansion valve 16 for cooling. In the receiver 18, the refrigerant is separated into gas and liquid, and the amount of refrigerant circulated is adjusted. On the downstream side of the receiver 18, the electronic expansion valve 17 for heating, which reduces the pressure of the high-temperature, high-pressure liquid refrigerant, is provided. Through the electronic expansion valve 17 for heating, the high-temperature, high-pressure liquid refrigerant becomes low-temperature, low-pressure refrigerant in gas and liquid phases, which is introduced into the heat-source-side air heat exchanger 12. The refrigerant in gas and liquid phases introduced into the heat-source-side air heat exchanger 12 which functions as an evaporator exchanges heat with the outdoor air to absorb heat therefrom, vaporizing as a result.

The low-temperature, low-pressure gas refrigerant, vaporized by absorbing heat from the outdoor air through the heat-source-side air heat exchanger 12, is sucked by the compressor 11 again via the four-way switching valve 15. The low-temperature, low-pressure gas refrigerant thus sucked into the compressor 11 is compressed by the compressor 11 to become high-temperature, high-pressure gas refrigerant. The refrigerant subsequently undergoes repeated state changes between gas and liquid through the same circulation path. It is known that, at this time, water components in the air freeze on the outer surface of the heat-source-side air heat exchanger 12, where the temperature is low, causing frosting.

This frost suppresses heat exchange between the refrigerant and the outdoor air at the heat-source-side air heat exchanger 12, reducing the heat exchange efficiency. Thus, it is necessary to detect the presence or absence of deposited frost and to perform a defrosting operation at certain operation time intervals, thereby removing the frost. In order to perform the defrosting operation, in the refrigerant circuit 14 described above, the four-way switching valve 15 is switched to reverse the refrigerant circulating direction, selecting the cooling cycle (defrosting cycle), in which the refrigerant is circulated in the direction of broken arrows in the figure. Then, high-temperature, high-pressure gas refrigerant discharged from the compressor 11 is introduced into the heat-source-side air heat exchanger 12. Thus, the frost deposited on the heat-source-side air heat exchanger 12 melts due to heat dissipation (heat of condensation) of the gas refrigerant.

During the reverse-cycle defrosting operation, the refrigerant/water heat exchanger 13 functions as an evaporator, absorbing heat from the water circulating through the hot-water circulation path 32 to vaporize the refrigerant, and the heat dissipated causes melting of the frost deposited on the heat-source-side air heat exchanger 12 by using the heat. At this time, if the water temperature becomes too low, water freezes in the refrigerant/water heat exchanger 13, resulting in the risk of damaging the refrigerant/water heat exchanger 13. Thus, during defrosting, it is necessary to prevent the refrigerant evaporation temperature from becoming too low with the temperature of water circulating through the refrigerant/water heat exchanger 13.

Thus, in this embodiment, a bypass circuit 40 is connected in parallel to the electronic expansion valve 16 for cooling, the electronic expansion valve 17 for heating, and the receiver 18 in the refrigerant circuit 14, and an electromagnetic valve 41 and a check valve 42 that are controlled to open or close during defrosting are provided in the bypass circuit 40. Accordingly, during defrosting, the pressure loss in the circuit between the heat-source-side air heat exchanger 12 and the refrigerant/water heat exchanger 13 is reduced. That is, the refrigerant having dissipated heat and condensed to cause melting of the frost at the heat-source-side air heat exchanger 12 can be supplied to the refrigerant/water heat exchanger 13 through the bypass circuit 40, bypassing the electronic expansion valve 17 for heating, the receiver 18, the electronic expansion valve 16 for cooling, etc.

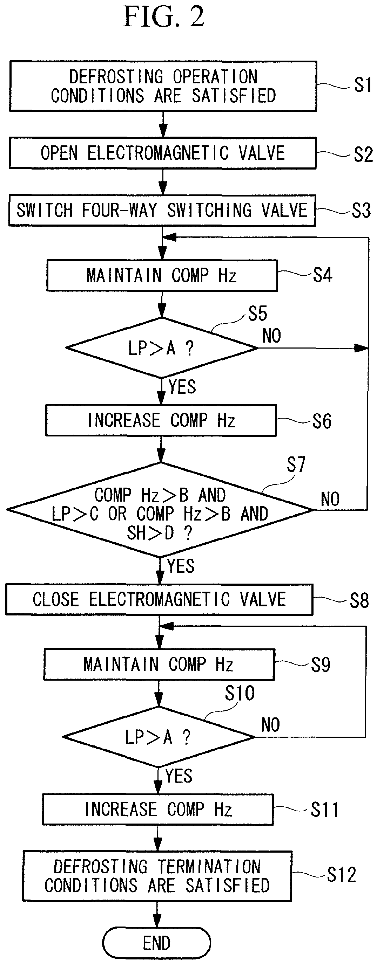

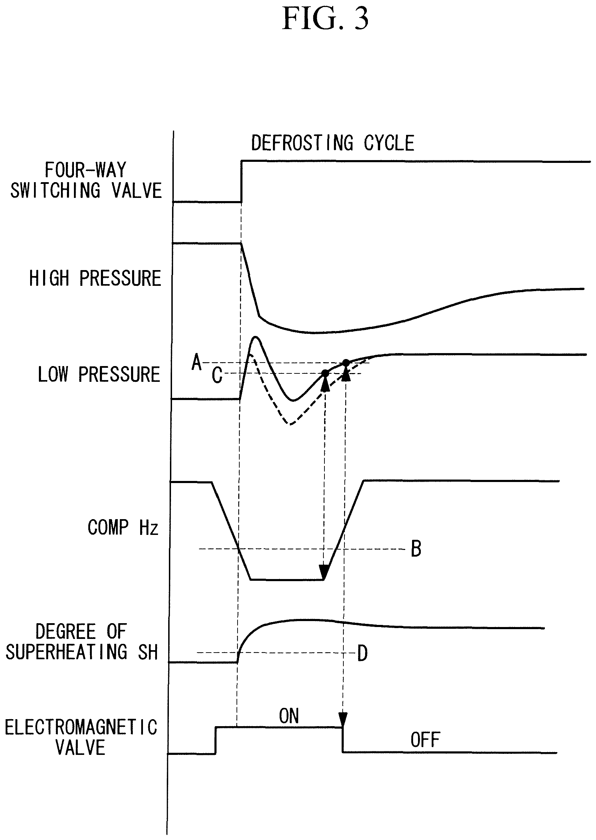

Furthermore, the electromagnetic valve 41 in the bypass circuit 40 is controlled to open or close by a defrosting controller 43 as described below. Figs. 2 and 3 show a flowchart and a timing chart of the control operation by the defrosting controller 43 for opening or closing the electromagnetic valve 41.

During a hot-water producing operation in the heating cycle, the defrosting controller 43 monitors whether defrosting operation conditions for the heat-source-side air heat exchanger 12 are satisfied based on temperature information from an outdoor-air temperature sensor 44 and a heat-exchanger temperature sensor 45 attached to the heat-source-side air heat exchanger 12. When the defrosting operation conditions are satisfied (step S1), the operation proceeds to step S2, in which the electromagnetic valve 41 in the bypass circuit 40 is opened.

At the same time, the operating frequency Hz of the compressor 11 is decreased to a minimum preset frequency (e.g., corresponding to 20 rps). Then, the operation proceeds to step S3, in which the refrigerant circuit 14 is switched from the heating cycle to the cooling cycle (defrosting cycle) by using the four-way switching valve 15. Thus, a defrosting operation starts, so that high-temperature, high-pressure refrigerant gas discharged from the compressor 11 is introduced into the heat-source-side air heat exchanger 12 via the four-way switching valve 15, where the refrigerant gas dissipates heat and condenses, causing melting of the frost deposited on the heat-source-side air heat exchanger 12. Although a portion of the condensed refrigerant circulates through the fully opened electronic expansion valve 17 for heating, the electronic expansion valve 16 for cooling, and the receiver 18, most of the condensed refrigerant circulates through the bypass circuit 40 to the refrigerant/water heat exchanger 13.

Thus, as shown in Fig. 3, a low pressure LP detected by a low-pressure sensor 46 initially rises after the switching of the four-way switching valve 15 but then falls rapidly. However, since a sufficient amount of refrigerant is then supplied to the refrigerant/water heat exchanger 13 through the bypass circuit 40, the reduction of the low pressure LP, i.e., the evaporation pressure, which would occur as indicated by a broken line if the supply of refrigerant were insufficient, is suppressed as indicated by a solid line. Accordingly, excessive cooling of water in the refrigerant/water heat exchanger 13, and freezing thereof as a result, can be prevented.

After the switching of the four-way switching valve 15, the operation is continued with the operating frequency Hz of the compressor 11 kept at the minimum preset frequency (step S4). Then, the low pressure LP starts rising soon. When it is confirmed in step S5 that the low pressure has become greater than or equal to a preset pressure A (e.g., 0.052 MPa), it is determined that there is no longer a risk of freezing at the refrigerant/water heat exchanger 13 due to a reduction of the evaporation pressure, and the operation proceeds to step S6. In step S6, the operating frequency Hz of the compressor 11 is gradually increased. When the rotation speed of the compressor 11 increases as the operating frequency of the compressor 11 is increased, the amount of refrigerant circulated increases, so that the defrosting ability for the heat-source-side air heat exchanger 12 is improved.

Then, in step S7, it is determined whether the operating frequency Hz of the compressor 11 (comp Hz) is greater than or equal to a preset frequency B (e.g., corresponding to 30 rps) and the low pressure LP is greater than or equal to a preset pressure C (e.g., 0.55 MPa) or the intake degree of superheating SH (calculated from the difference between a temperature detected by a heat-exchanger-exit temperature sensor 47 and a pressure saturation temperature corresponding to a value detected by the low-pressure sensor 46) is less than or equal to a preset degree of superheating D (e.g., 5 °C). If YES, the operation proceeds to step S8, in which the electromagnetic valve 41 of the bypass circuit 40 is closed. Then, all the refrigerant condensed by the heat-source-side air heat exchanger 12 is circulated to the refrigerant/water heat exchanger 13 via the electronic expansion valve 17 for heating, the receiver 18, and the electronic expansion valve 16 for cooling.

When the electromagnetic valve 41 is closed, the operating frequency Hz of the compressor 11 is kept at the preset frequency B (step S9). When it is determined in step S10 that the low pressure LP is greater than or equal to the preset pressure A (e.g., 0.52 MPa), the operating frequency Hz of the compressor 11 is further increased (step S11). Thus, the defrosting operation is continued with a further improved defrosting ability. When the frost on the heat-source-side air heat exchanger 12 melts, the temperature of the heat-source-side air heat exchanger 12 starts rising. Based on information from the heat-exchanger temperature sensor 45 that detects the temperature of the heat-source-side air heat exchanger 12, in step S12, it is determined whether defrosting termination conditions are satisfied. If it is determined that the defrosting termination conditions are satisfied, the defrosting operation is terminated. Then, the operation returns to the hot-water producing operation.

Thus, according to this embodiment, from immediately after the start of a defrosting operation, the refrigerant having dissipated heat and condensed at the heat-source-side air heat exchanger 12 is supplied to the refrigerant/water heat exchanger 13 through the bypass circuit 40, bypassing the electronic expansion valve 17 for heating and the electronic expansion valve 16 for cooling, and the receiver 18, so that a sufficient amount of refrigerant can be supplied to the refrigerant/water heat exchanger 13. This serves to prevent freezing of and damage to the refrigerant/water heat exchanger 13, caused by a drop in the evaporation temperature resulting in an excessive drop in the water temperature immediately after the start of the defrosting operation, when refrigerant does not readily flow to the refrigerant/water heat exchanger 13 due to a pressure loss attributable to the electronic expansion valves (16, 17), etc. Furthermore, since it is possible to absorb as much heat as possible from water at the refrigerant/water heat exchanger 13 and to use the heat for defrosting, the time required for defrosting of the heat-source-side air heat exchanger 12 can be minimized.

Furthermore, since the bypass circuit 40 is connected in parallel so that both the electronic expansion valve 16 for cooling and the electronic expansion valve 17 for heating are bypassed, the pressure loss in the circuit between the heat-source-side air heat exchanger 12 and the refrigerant/water heat exchanger 13 can be considerably reduced during defrosting, so that a sufficient amount of refrigerant condensed by the heat-source-side air heat exchanger 12 can be supplied to the refrigerant/water heat exchanger 13 through the bypass circuit 40. This serves to suppress an excessive drop in the evaporation temperature immediately after the start of a defrosting operation, resulting from insufficient refrigerant at the refrigerant/water heat exchanger 13. Accordingly, freezing of water at the refrigerant/water heat exchanger 13 can be prevented reliably.

Furthermore, since the bypass circuit 40 includes the check valve 42 that prohibits the flow of refrigerant in the heating cycle, in addition to the electromagnetic valve 41 for opening or closing the circuit, there is no risk of the refrigerant flowing to the bypass circuit 40 during the heating cycle, in which hot water is produced. Therefore, when the defrosting operation conditions are satisfied, the electromagnetic valve 41 of the bypass circuit 40 may be opened before switching of the refrigerant circuit 14 to the cooling cycle (defrosting cycle) with the four-way switching valve 15. Accordingly, when a defrosting operation is started, it is possible to immediately circulate refrigerant through the bypass circuit 40 and smoothly supply the refrigerant to the refrigerant/water heat exchanger 13, thereby suppressing a drop in the evaporation temperature.

Furthermore, the electromagnetic valve 41 of the bypass circuit 40 is opened when the defrosting operation conditions are satisfied and is closed when the operating frequency Hz of the compressor 11 is greater than or equal to the preset frequency B and the low pressure LP is greater than or equal to the preset pressure C or the intake degree of superheating SH is less than or equal to the preset value D during a defrosting operation. Thus, in a situation immediately after the start of a defrosting operation, where refrigerant does not readily flow to the refrigerant/water heat exchanger 13 and thus the evaporation temperature tends to drop, refrigerant is supplied reliably through the bypass circuit 40, suppressing a drop in the evaporation temperature. On the other hand, in a situation where the operating frequency Hz of the compressor 11 is greater than or equal to the preset frequency B and the low pressure LP is greater than or equal to the preset pressure C or the intake degree of superheating SH is less than or equal to the preset value D, so that there is no risk of freezing at the refrigerant/water heat exchanger 13, refrigerant is supplied through the normal refrigerant circuit 14, where the electronic expansion valve 16 for cooling and the electronic expansion valve 17 for heating are provided. Thus, it is possible to absorb a sufficient amount of heat from water at the refrigerant/water heat exchanger 13 to vaporize the refrigerant and to use the heat for defrosting.

Thus, freezing of and damage to the refrigerant/water heat exchanger 13 resulting from a drop in the evaporation temperature can be prevented, and the time required for defrosting of the heat-source-side air heat exchanger 12 can be minimized by absorbing as much heat as possible from water and performing defrosting with the heat. Furthermore, a reverse flow of liquid to the compressor 11 during defrosting operations is prevented, which serves to reduce the risk of problems in the compressor 11, thereby improving the reliability of the compressor 11.

Furthermore, when a defrosting operation is started upon satisfying the defrosting operation conditions by opening the electromagnetic valve 41 and switching the refrigerant circuit 14 to the cooling cycle by using the four-way switching valve 15, the operating frequency Hz of the compressor 11 is decreased to the minimum preset frequency (e.g., corresponding to 20 rps). Thus, immediately after the start of the defrosting operation, it is possible to supply a sufficient amount of refrigerant to the refrigerant/water heat exchanger 13 through the bypass circuit 40, and also to suppress an excessive drop in the evaporation temperature by decreasing the operating frequency Hz of the compressor 11 to the minimum preset frequency to lower the performance of the compressor 11. Accordingly, freezing of and damage to the refrigerant/water heat exchanger 13 resulting from a drop in the evaporation temperature can be prevented more reliably.

Furthermore, after the start of the defrosting operation, the operating frequency Hz of the compressor 11 is maintained at the minimum preset frequency, and when the low pressure LP becomes greater than or equal to the preset pressure A, the operating frequency Hz of the compressor 11 is gradually increased from the minimum preset frequency. Thus, after the start of the defrosting operation, while the low pressure LP, i.e., the evaporation pressure, is lower than the preset pressure A, so that the evaporation temperature is low, the operating frequency Hz of the compressor 11 is maintained at the minimum preset frequency, suppressing a drop in the low pressure LP. When the low pressure LP becomes greater than or equal to the preset pressure A, so that there is no risk of freezing caused by a drop in the evaporation temperature, the performance of the compressor 11 can be raised by increasing the operating frequency Hz of the compressor 11. Thus, it is possible to enhance the defrosting ability while preventing freezing of and damage to the refrigerant/water heat exchanger 13 resulting from an excessive drop in the evaporation temperature, so that the time required for defrosting can be reduced.

Furthermore, in this embodiment, when the operating frequency Hz of the compressor 11 becomes greater than or equal to the preset frequency B and the low pressure LP becomes greater than or equal to the preset pressure C or the intake degree of superheating SH becomes less than or equal to the preset value D, so that the electromagnetic valve 41 is closed, the operating frequency Hz of the compressor 11 is maintained at the frequency B. Furthermore, when the low pressure LP becomes greater than or equal to the preset pressure A, the operating frequency Hz of the compressor 11 is further increased and the operation is continued, and the operation is terminated when the defrosting operation termination conditions are satisfied. Thus, even when the electromagnetic valve 41 in the bypass circuit 40 is closed to disable the bypass supply of refrigerant to the refrigerant/water heat exchanger 13, while the low pressure LP is greater than or equal to the preset pressure A, it is possible to enhance the defrosting ability by further increasing the operating frequency Hz of the compressor 11 until the defrosting operation termination conditions are satisfied. Accordingly, the time required for defrosting can be reduced even further.

### [Second Embodiment]

Next, a second embodiment of the present invention will be described with reference to Fig. 1.

This embodiment differs from the above-described first embodiment regarding the connection points of the bypass circuit 40. This embodiment is otherwise the same as the first embodiment, so that descriptions of the commonalities will be omitted.

In this embodiment, the bypass circuit 40 having the electromagnetic valve 41 and the check valve 42 is connected at a point between the heat-source-side air heat exchanger 12 and the electronic expansion valve 17 for heating and a point between the receiver 18 and the electronic expansion valve 16 for cooling in the refrigerant circuit 14, so that the bypass circuit 40 is connected in parallel only to the electronic expansion valve 17 for heating and the receiver 18, as indicated by a broken line in Fig. 1.

In the refrigerant circuit 14 where two electronic expansion valves connected in series with each other, namely, the electronic expansion valve 16 for cooling and the electronic expansion valve 17 for heating, are provided, even when the bypass circuit 40 is connected in parallel only to the electronic expansion valve 17 for heating, the pressure loss in the circuit between the heat-source-side air heat exchanger 12 and the refrigerant/water heat exchanger 13 can be reduced, so that a sufficient amount of refrigerant condensed by the heat-source-side air heat exchanger 12 can be supplied to the refrigerant/water heat exchanger 13. This also serves to suppress an excessive drop in the evaporation temperature at the refrigerant/water heat exchanger 13, which serves to prevent freezing of water at the refrigerant/water heat exchanger 13.

The present invention is not limited to the embodiment described above, and various modifications can be made without departing from the spirit of the present invention. For example, in the embodiments described above, after the electromagnetic valve 41 of the bypass circuit 40 is closed upon satisfying preset conditions, the operating frequency Hz of the compressor 11 is maintained, and when the low pressure LP becomes greater than or equal to the preset pressure A, the operating frequency Hz of the compressor 11 is increased, and the defrosting operation is continued until the defrosting termination conditions are satisfied; alternatively, the electromagnetic valve 41 may be controlled to open again to return to normal operation when the low pressure LP or the intake degree of superheating SH no longer satisfies the preset conditions.

Furthermore, in the above-described embodiments, two electronic expansion valves, namely, the electronic expansion valve 16 for cooling and the electronic expansion valve 17 for heating, are provided in the refrigerant circuit 14; alternatively, the present invention can also be implemented similarly with a refrigerant circuit having a single electronic expansion valve for both cooling and heating.

### {Reference Signs List}

- 1: Heat-pump hot water supply and air-conditioning apparatus
- 10: Air-heat-source heat pump
- 11: Compressor
- 12: Heat-source-side air heat exchanger
- 13: Refrigerant/water heat exchanger
- 14: Refrigerant circuit
- 15: Four-way switching valve
- 16: Electronic expansion valve for cooling
- 17: Electronic expansion valve for heating
- 40: Bypass circuit
- 41: Electromagnetic valve
- 42: Check valve
- 43: Defrosting controller
- 44: Outdoor-air temperature sensor
- 45: Heat-exchanger temperature sensor
- 46: Low-pressure sensor
- 47: Heat-exchanger-exit temperature sensor

## Claims

1. A heat-pump hot water supply and air-conditioning apparatus (1) comprising a refrigerant circuit (14) including a compressor (11), a four-way switching valve (15), a heat-source-side air heat exchanger (12), one or two electronic expansion valves (16, 17), and a refrigerant/water heat exchanger (13), in which water is heated using refrigerant at the refrigerant/water heat exchanger (13) to produce hot water, and when frosting occurs at the heat-source-side air heat exchanger (12), the refrigerant circuit (14) is switched to a cooling cycle by using the four-way switching valve (15), whereby a defrosting operation is performed,
wherein a bypass circuit (40) having an electromagnetic valve (41) that is controlled to open or close during the defrosting operation is connected in parallel to at least one of the electronic expansion valves (16, 17),and
wherein the electromagnetic valve (41) in the bypass circuit (40) is opened when defrosting operation conditions are satisfied, and is closed when the operating frequency of the compressor (11) becomes greater than or equal to a preset frequency and
a low pressure becomes greater than or equal to a preset pressure, or
an intake degree of superheating becomes less than or equal to a preset value during the defrosting operation.

2. A heat-pump hot water supply and air-conditioning apparatus (1) according to Claim 1, wherein the bypass circuit (40) is connected in parallel to both an electronic expansion valve (16) for cooling and an electronic expansion valve (17) for heating, which constitute the electronic expansion valves (16, 17) and are connected in series with each other.

3. A heat-pump hot water supply and air-conditioning apparatus (1) according to Claim 1, wherein, of an electronic expansion valve (16) for cooling and an electronic expansion valve (17) for heating, which constitute the electronic expansion valves (16, 17) and are connected in series with each other, the bypass circuit (40) is connected in parallel only to the electronic expansion valve (17) for heating.

4. A heat-pump hot water supply and air-conditioning apparatus (1) according to any one of Claims 1 to 3, wherein the bypass circuit (40) has a check valve (42) for prohibiting a flow of refrigerant in a heating cycle.

5. A heat-pump hot water supply and air-conditioning apparatus (1) according to any one of Claims 1 to 4, wherein, when the defrosting operation is started upon satisfying the defrosting operation conditions by opening the electromagnetic valve (41) and switching the refrigerant circuit (14) to the cooling cycle by using the four-way switching valve (15), the operating frequency of the compressor (11) is initially decreased to a minimum preset frequency.

6. A heat-pump hot water supply and air-conditioning apparatus (1) according to Claim 5, wherein, after the defrosting operation is started, the operating frequency of the compressor (11) is maintained at the minimum preset frequency, and when a low pressure becomes greater than or equal to a preset pressure, the operating frequency of the compressor (11) is gradually increased from the minimum preset frequency.

7. A heat-pump hot water supply and air-conditioning apparatus (1) according to any one of Claims 1 to 6, wherein, after the operating frequency of the compressor (11) becomes greater than or equal to a preset frequency and a low pressure becomes greater than or equal to a preset pressure or an intake degree of superheating becomes less than or equal to a preset value during the defrosting operation, so that the electromagnetic valve (41) is closed, the operating frequency of the compressor (11) is maintained at that frequency, and when the low pressure becomes greater than or equal to another preset pressure, the operating frequency of the compressor (11) is increased, and the defrosting operation is terminated when defrosting operation termination conditions are satisfied.

## Patentansprüche

1. Wärmepumpen-Warmwasserversorgungs- und Klimaanlagevorrichtung (1), umfassend einen Kühlmittelkreislauf (14), der einen Kompressor (11), ein Vierwege-Schaltventil (15), einen wärmequellenseitigen Luftwärmetauscher (12), ein oder zwei elektronische Expansionsventile (16, 17) und einen Kühlmittel-/Wasserwärmetauscher (13) beinhaltet, wobei Wasser unter Verwendung eines Kühlmittels an dem Kühlmittel-/Wasserwärmetauscher (13) erwärmt wird, um Warmwasser zu erzeugen, und, wenn es zu einer Vereisung an dem wärmequellenseitigen Luftwärmetauscher (12) kommt, der Kühlmittelkreislauf (14) unter Verwendung des Vierwege-Schaltventils (15) auf einen Kühlzyklus umgeschaltet wird, wodurch ein Enteisungsbetrieb durchgeführt wird,
wobei eine Bypassschaltung (40), die ein elektromagnetisches Ventil (41) aufweist, das gesteuert wird, um sich während des Enteisungsvorgangs zu öffnen oder zu schließen, mit mindestens einem der elektronischen Expansionsventile (16, 17) parallelgeschaltet ist, und
wobei das elektromagnetische Ventil (41) in der Bypassschaltung (40) geöffnet wird, wenn Enteisungsbetriebsbedingungen erfüllt sind, und geschlossen wird, wenn die Betriebsfrequenz des Kompressors (11) größer als oder gleich einer vorbestimmten Frequenz ist und
ein Niederdruck größer als oder gleich einem voreingestellten Druck ist, oder ein Einlassüberhitzungsgrad während des Enteisungsbetriebs kleiner als oder gleich einem voreingestellten Wert ist.

2. Wärmepumpen-Warmwasserversorgungs- und Klimaanlagevorrichtung (1) nach Anspruch 1, wobei die Bypassschaltung (40) sowohl mit einem elektronischen Expansionsventil (16) zum Kühlen als auch einem elektronischen Expansionsventil (17) zum Erwärmen parallelgeschaltet ist, welche die elektronischen Expansionsventile (16, 17) darstellen und miteinander in Reihe geschaltet sind.

3. Wärmepumpen-Warmwasserversorgungs- und Klimaanlagevorrichtung (1) nach Anspruch 1, wobei die Bypassschaltung (40) von einem elektronischen Expansionsventil (16) zum Kühlen und einem elektronischen Expansionsventil (17) zum Erwärmen, welche die elektronischen Expansionsventile (16, 17) darstellen und miteinander in Reihe geschaltet sind, nur mit dem elektronischen Expansionsventil (17) zum Erwärmen parallelgeschaltet ist.

4. Wärmepumpen-Warmwasserversorgungs- und Klimaanlagevorrichtung (1) nach einem der Ansprüche 1 bis 3, wobei die Bypassschaltung (40) ein Rückschlagventil (42) zum Unterbinden eines Kühlmittelflusses in einem Erwärmungszyklus aufweist.

5. Wärmepumpen-Warmwasserversorgungs- und Klimaanlagevorrichtung (1) nach einem der Ansprüche 1 bis 4, wobei, wenn der Enteisungsbetrieb bei Erfüllung der Enteisungsbetriebsbedingungen durch Öffnen des elektromagnetischen Ventils (41) und Umschalten des Kühlmittelkreislaufs (14) auf den Kühlkreislauf unter Verwendung des Vierwege-Schaltventils (15) gestartet wird, die Betriebsfrequenz des Kompressors (11) zunächst auf eine voreingestellte Minimalfrequenz verringert wird.

6. Wärmepumpen-Warmwasserversorgungs- und Klimaanlagevorrichtung (1) nach Anspruch 5, wobei, nachdem der Enteisungsbetrieb gestartet ist, die Betriebsfrequenz des Kompressors (11) zunächst auf der voreingestellten Minimalfrequenz gehalten wird, und, wenn ein Niederdruck größer als oder gleich einem voreingestellten Druck ist, die Betriebsfrequenz des Kompressors (11) von der voreingestellten Mindestfrequenz schrittweise erhöht wird.

7. Wärmepumpen-Warmwasserversorgungs- und Klimaanlagevorrichtung (1) nach einem der Ansprüche 1 bis 6, wobei, nachdem die Betriebsfrequenz des Kompressors (11) größer oder gleich einer voreingestellten Frequenz ist und ein Niederdruck größer als oder gleich einem voreingestellten Druck ist oder ein Einlassüberhitzungsgrad während des Enteisungsbetriebs kleiner oder gleich einem voreingestellten Wert ist, sodass das elektromagnetische Ventil (41) geschlossen wird, die Betriebsfrequenz des Kompressors (11) auf dieser Frequenz gehalten wird, und, wenn der Niederdruck größer als oder gleich einem anderen vorbestimmten Druck ist, die Betriebsfrequenz des Kompressors (11) erhöht wird und der Enteisungsbetrieb beendet wird, wenn die Enteisungsbetriebsbeendigungsbedingungen erfüllt sind.

## Revendications

1. Appareil d'alimentation en eau chaude et de climatisation d'une pompe à chaleur (1) comprenant un circuit réfrigérant (14) comprenant un compresseur (11), une vanne de commutation à quatre voies (15), un échangeur thermique d'air côté source de chaleur (12), une ou deux vannes de détente électroniques (16, 17), et un échangeur thermique réfrigérant/eau (13), dans lequel l'eau est chauffée à l'aide d'un réfrigérant au niveau de l'échangeur thermique réfrigérant/eau (13) pour produire une eau chaude, et lorsque survient un givrage au niveau de l'échangeur thermique d'air côté source de chaleur (12), le circuit réfrigérant (14) est commuté vers un cycle de refroidissement à l'aide de la vanne de commutation à quatre voies (15), moyennant quoi une opération de dégivrage est réalisée,
dans lequel un circuit de contournement (40) présentant une vanne électromagnétique (41) qui est commandée pour s'ouvrir ou se fermer pendant l'opération de dégivrage est reliée en parallèle à au moins une des vannes de détente électroniques (16, 17), et
dans lequel la vanne électromagnétique (41) dans le circuit de contournement (40) est ouverte lorsque des conditions d'opération de dégivrage sont remplies, et est fermée lorsque la fréquence de fonctionnement du compresseur (11) devient supérieure ou égale à une fréquence préréglée et une basse pression devient supérieure ou égale à une pression préréglée, ou
un degré d'admission de surchauffe devient inférieur ou égal à une valeur préréglée pendant l'opération de dégivrage.

2. Appareil d'alimentation en eau chaude et de climatisation d'une pompe à chaleur (1) selon la revendication 1, dans lequel le circuit de contournement (40) est relié en parallèle tant à une vanne de détente électronique (16) pour refroidir qu'à une vanne de détente électronique (17) pour chauffer, qui constituent les vannes de détente électroniques (16, 17) et sont reliées en série l'une à l'autre.

3. Appareil d'alimentation en eau chaude et de climatisation d'une pompe à chaleur (1) selon la revendication 1, dans lequel, parmi une vanne de détente électronique (16) pour refroidir et une vanne de détente électronique (17) pour chauffer, qui constituent les vannes de détente électroniques (16, 17) et sont reliées en série l'une à l'autre, le circuit de contournement (40) est relié en parallèle uniquement à la vanne de détente électronique (17) pour chauffer.

4. Appareil d'alimentation en eau chaude et de climatisation d'une pompe à chaleur (1) selon l'une quelconque des revendications 1 à 3, dans lequel le circuit de contournement (40) présente une vanne antiretour (42) pour empêcher un flux de réfrigérant dans le cycle de chauffe.

5. Appareil d'alimentation en eau chaude et de climatisation d'une pompe à chaleur (1) selon l'une quelconque des revendications 1 à 4, dans lequel, lorsque l'opération de dégivrage est démarrée dès lors qu'elle remplit les conditions d'opération de dégivrage en ouvrant la vanne électromagnétique (41) et en commutant le circuit réfrigérant (14) vers le cycle de refroidissement à l'aide de la vanne de commutation à quatre voies (15), la fréquence de fonctionnement du compresseur (11) est d'abord diminuée à une fréquence minimale préréglée.

6. Appareil d'alimentation en eau chaude et de climatisation d'une pompe à chaleur (1) selon la revendication 5, dans lequel, après que l'opération de dégivrage ait démarrée, la fréquence de fonctionnement du compresseur (11) est maintenue à la fréquence minimale préréglée, et lorsqu'une basse pression devient supérieure ou égale à une pression préréglée, la fréquence de fonctionnement du compresseur (11) est progressivement augmentée à partir de la fréquence minimale préréglée.

7. Appareil d'alimentation en eau chaude et de climatisation d'une pompe à chaleur (1) selon l'une quelconque des revendications 1 à 6, dans lequel, après que la fréquence de fonctionnement du compresseur (11) soit devenue supérieure ou égale à une fréquence préréglée et une basse pression soit devenue supérieure ou égale à une pression préréglée ou un degré d'admission de surchauffe soit devenu inférieur ou égal à une valeur préréglée pendant l'opération de dégivrage, de sorte que la vanne électromagnétique (41) soit fermée, la fréquence de fonctionnement du compresseur (11) est maintenue à cette fréquence, et lorsque la basse pression devient supérieure ou égale à une autre pression préréglée, la fréquence de fonctionnement du compresseur (11) est augmentée, et l'opération de dégivrage se termine lorsque les conditions de fin d'opération de dégivrage sont remplies.
